# EUROPEAN PATENT APPLICATION

(11) **EP 1 601 215 A2**
(43) Date of publication of application: **30.11.2005**
(21) Application number: 04255896.5
(22) Date of filing: 27.09.2004
(51) Int. Cl.: H04Q 7/32

(54) **Wireless communication system and encryption control method**

(30) Priority: 28.05.2004 JP 2004158910
(71) Applicant: FUJITSU LIMITED, Kawasaki-shi, Kanagawa 211-8588 (JP)
(72) Inventor: Hara, Masayuki, c/o Fujitsu Limited, Kawasaki-shi, Kanagawa 211-8588 (JP)
(74) Representative: Hitching, Peter Matthew

(57) **Abstract**

In an encryption control method of a wireless communication system in which, at the time of wireless communication, encryption parameters are used to encrypt data, and the encryption parameters are used for decryption, a judgment is made as to whether an originating mobile terminal (11) and a terminating mobile terminal (21) exist in the same network, and if the terminals exist in the same network, data is passed through by network-side devices (RNCs 31, 32) without performing encryption/decryption processing, and encryption/decryption processing is performed only by the originating mobile terminal and by the terminating mobile terminal.

## Description

### BACKGROUND OF THE INVENTION

This invention relates to a wireless communication system and encryption control method to perform encryption of data in the wireless circuits of a wireless network, and in particular relates to a wireless communication system and encryption control method for performance of encryption processing between an originating mobile terminal and a terminating mobile terminal, and not in a wireless network control device (Radio Network Controller, RNC) when the originating mobile terminal (UE) and terminating mobile terminal (UE) are in the same network.

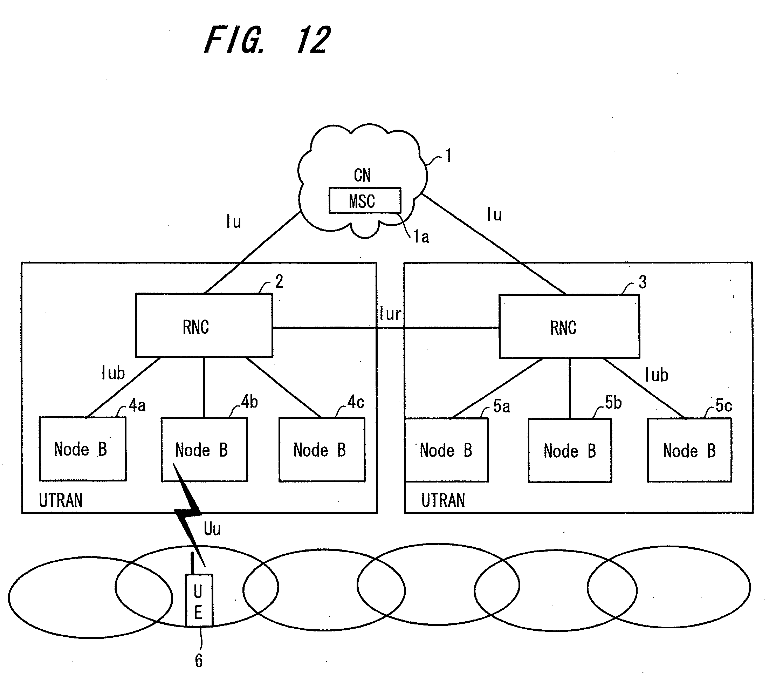

Specifications for wireless communication systems employing the W-CDMA method have been established by the 3GPP (3rd Generation Partnership Project), and actual services are now being initiated within Japan as well as elsewhere. Fig. 12 summarizes the configuration of a wireless communication system, comprising an upper-level network (Core Network, CN) 1, wireless network control devices (Radio Network Controller, RNC) 2, 3, wireless base stations (NodeB) 4a through 4c and 5a through 5c, and mobile equipment (User Equipment, UE) 6. The network comprising the RNCs in the CN and the plurality of NodeBs under the RNCs is called a UTRAN (UMTS Terrestrial Radio Access Network). A MSC (Mobile Switching Center) 1a which performs call connection control, service control, position control and similar for user equipment, exists in the core network 1. A UE and NodeB are connected by a Uu interface, and the physical bearer is wireless (wireless interval). An Iub interface, Iu interface, and Iur interface are connected between a NodeB and RNC, RNC and CN, and RNC and RNC, respectively, and the physical bearer is wired (wired interval). The direction of data flow from the CN to the UE is defined as the downlink (DL) direction, and the opposite direction, from the UE to the CN, is the uplink (UL) direction.

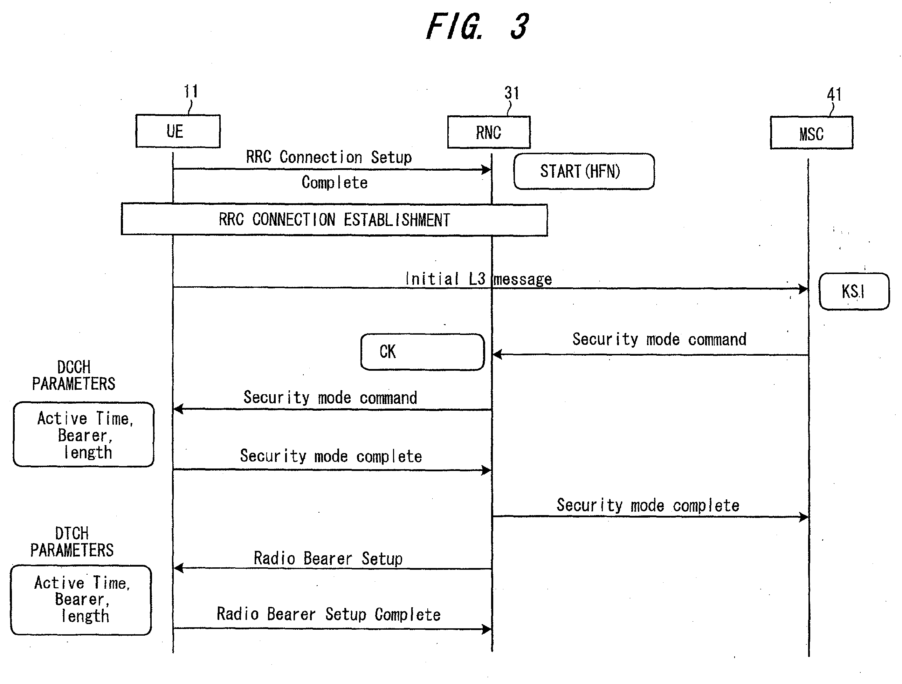

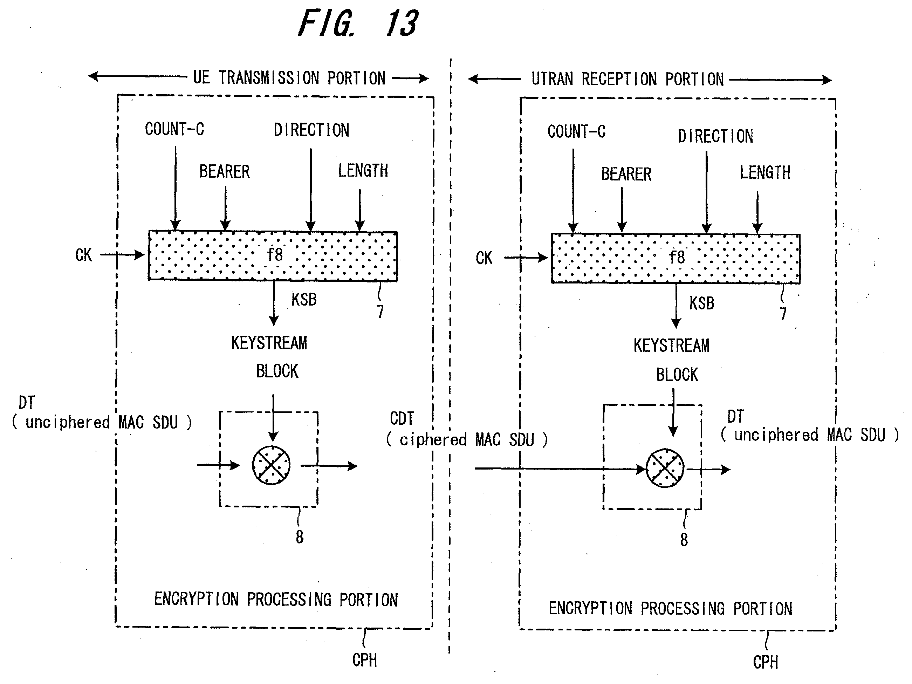

In order to prevent illicit interception by third parties in the above network, encryption is applied to user data between a UE and the UTRAN, to control information, and to TMSI (Temporary Mobile Subscriber Identity) information, which is a temporary user identifier, and similar. For example, in a 3GPP system the KASUMI algorithm is adopted to apply encryption to information. Fig. 13 explains a specific method of applying encryption; this is an example of an uplink (UL) in which encryption is applied to data in the UE transmission portion, and the data is decrypted in the receiving portion of the RNC (see for example Keiji Tachikawa, W-CDMA Mobile Communication System, Maruzen, June 25 2001, pp. 156-157, Figs. 3-60, Tables 3-18).

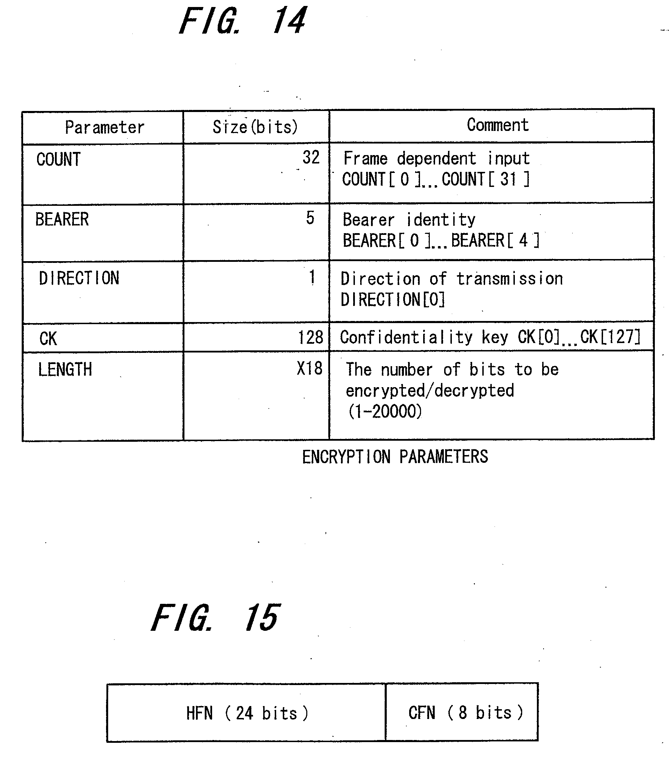

An encryption processing portion CPH is configured similarly in the UE and UTRAN, and comprises an encryption code generation block 7 which uses encryption parameters to generate an encryption code (keystream block) KSB, and a computation portion 8 which computes the exclusive logical sum of the encryption code and the data for processing DT. The encryption parameters necessary for encryption code generation are COUNT-C, BEARER, DIRECTION, LENGTH and CK, as shown in Fig. 14; using these encryption parameters, the encryption code KSB is generated according to the f8 algorithm (defined by 3GPP). The same encryption parameters are used by the UE and UTRAN, and only COUNT-C changes according to conditions; the other parameters have fixed values. COUNT-C is a 32-bit counter value; BEARER is a 5-bit bearer identifier; DIRECTION is a single bit indicating the transmission direction (UL or DL); CK is a 128-bit secret key (encryption key); and LENGTH is the bit length of data to be ciphered. Counters are provided in both the UE and UTRAN, and count clock signals with the same period.

The encryption processing portion CPH on the transmission side performs ciphering of data by computing, in bit units, the exclusive logical sum of the encryption code KSB and the data portion (unciphered MAC SDU) DT which is to be encrypted, and transmits the ciphered data (ciphered MAC SDU) CDT. The encryption processing portion CPH on the receiving side deciphers the data by computing, in bit units, the exclusive logical sum of the encryption code KSB and the received ciphered data (ciphered MAC SDU) CDT, and outputs the deciphered data (unciphered MAC SDU) DT.

In the 3GPP system, of the encryption parameters, the count value COUNT-C of the counters comprises a long-period sequence number SN (=HFN) and a short-period sequence number SN (=MAC CFN). Fig. 15 explains the COUNT-C parameter, comprising a 24-bit long-period sequence number SN (=HFN) and an 8-bit short-period sequence number SN (=CFN); the long-period sequence number HFN is incremented (increased) upon each cycle of the short-period sequence number CFN. However, incrementing is performed after the encryption activation time, described below, is set.

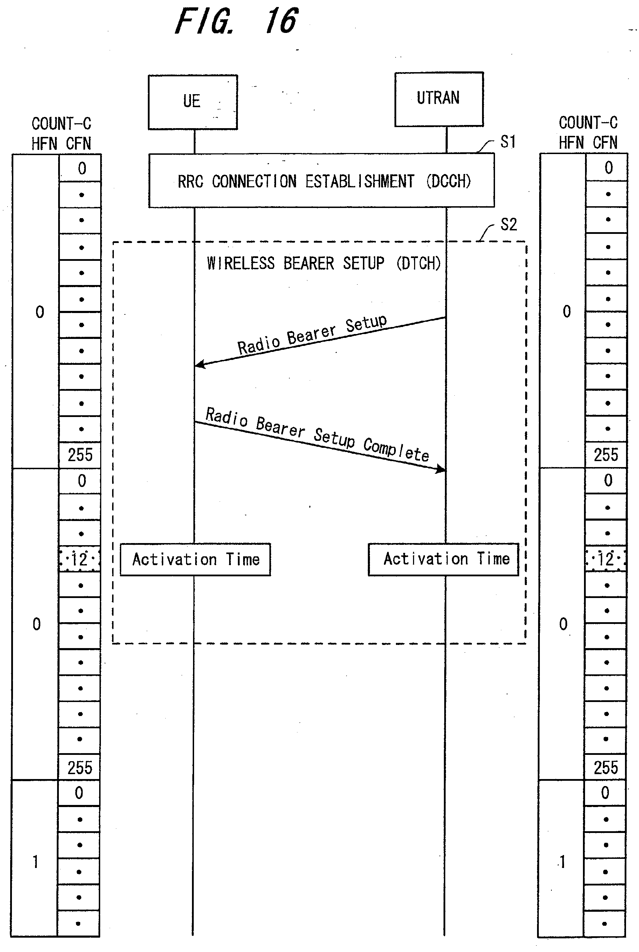

Fig. 16 explains a simple encryption execution sequence for the DTCH of a CS (circuit switched service) call between a UE and the UTRAN (for example, an RNC); (1) due to the CS call, an RRC connection setup sequence between the UE and UTRAN is executed, and a signaling connection (DCCH) is established (S1), and (2) then, a UE-UTRAN wireless bearer setup sequence (DTCH setup sequence) is executed, to set up a voice call connection (S2). Here DTCH is an individual traffic channel for data transmission/reception (dedicated traffic channel), and DCCH is an individual control channel for control information transmission/reception (dedicated control channel).

As explained in Fig. 15, the COUNT-C parameter for CS calls uses an 8-bit CFN (Connection Frame Number) has the short-period sequence number. The CFN takes values from 0 to 255, and is incremented in 10 ms cycles. This short-period sequence number CFN and the long-period sequence number HFN are controlled so as to be the same values in the UE and UTRAN.

With respect to UL (uplink) encryption, in the second half of the wireless bearer setup sequence (DTCH setup sequence) S2 of Fig. 16, UTRAN sends a Radio Bearer Setup message to the UE. The Radio Bearer Setup message comprises 1) ciphering mode info, specifying an encryption algorithm and similar, and 2) activation time, BEARER, and LENGTH, indicating the encryption initiation point (time of initiation of encryption). In the example of Fig. 16, the activation time is CFN=12. Consequently when the short-period sequence number CFN of the COUNT-C parameter in the UE and UTRAN becomes 12, thereafter encryption processing synchronized between the UE and UTRAN can be begun. Further, each time the short-period sequence number CFN overflows (exceeds 255), the long-period sequence numbers HFN in the UE and UTRAN are both incremented, so that the COUNT-C parameter has the same value in UE and UTRAN, and correct synchronized encryption processing can be continued. Processing is similar for the DL (downlink) direction; information is passed in the radio bearer setup, and the DL encryption timing is set to the activation time to begin encryption processing.

In current 3GPP systems, in order to prevent the interception of data during wireless communication, transmission data is encrypted between the originating-side UE and RNC, and between the terminating-side UE and RNC. That is, the originating-side UE encrypts the data and sends the data to the originating RNC; the originating-side RNC decrypts the data and transmits the data to the receiving-side RNC; the terminating-side RNC again encrypts the data and transmits the data to the terminating-side UE; and the terminating-side terminal decrypts the data.

The reason for decryption by the originating-side RNC is that the encryption parameters used by the originating-side UE and RNC and the encryption parameters used by the terminating-side UE and RNC are different, so that if the originating-side RNC does not decrypt the data, decryption on the terminating side becomes impossible. As another reason, because a fixed terminal has no decryption functions, if the data is not decrypted by the originating-side RNC, a fixed terminal, upon receiving encrypted data, cannot perform decryption.

From the above, even when an originating terminal and a terminating terminal of the prior art exist in the same network (for example, when associated with an area managed by the same RNC, or when associated with an area managed by the same MSC), processing to encrypt/decrypt user data must be performed four times, resulting in an increased burden on the RNCs and a decrease in the number of channels (the number of users) which can be accommodated.

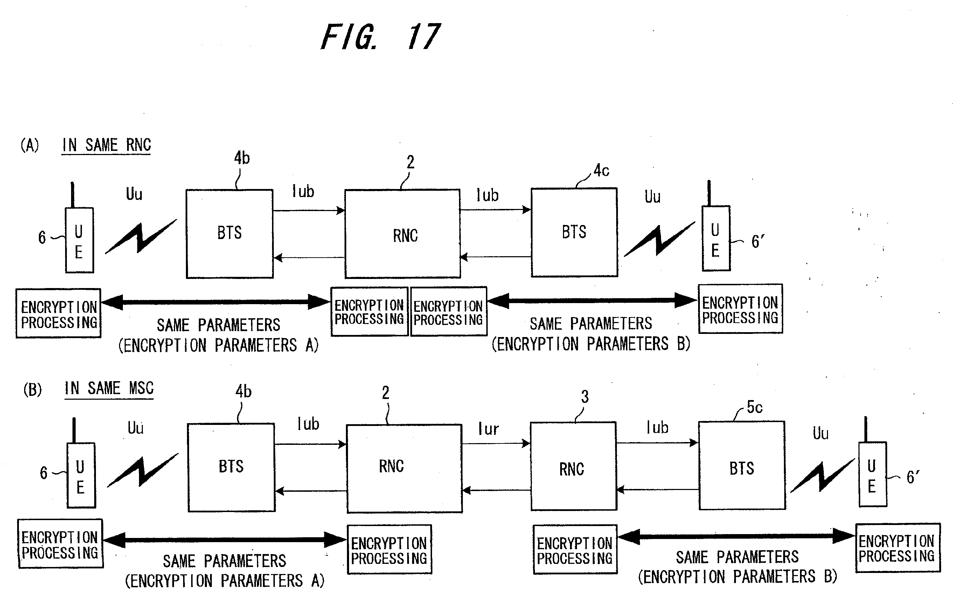

Fig. 17A explains encryption/decryption processing when an originating-side terminal (UE) and terminating-side terminal (UE) are both under the same RNC; the originating-side UE 6 uses the encryption parameters A to encrypt the data and transmits the data to the RNC 2 via the node (base station BTS) 4b, and the RNC 2 uses the encryption parameters A with the originating-side UE 6 to perform decryption. After this, the RNC 2 uses the encryption parameters B with the terminating-side UE 6' to encrypt the data and transmits the data to the terminating-side UE 6' via the base station BTS 4c, and the terminating-side UE 6' performs decryption using the encryption parameters B.

Fig. 17B explains encryption/decryption processing when the originating-side UE and terminating-side UE are both under the same MSC; the originating-side UE 6 uses the encryption parameters A to encrypt the data and transmits the data to the RNC 2 via the base station BTS 4b, and the RNC 2 uses the encryption parameters A with the originating-side UE 6 to perform decryption and transmits the data to the terminating-side RNC 3. The terminating-side RNC 3 uses the encryption parameters B with the terminating-side UE 6' to encrypt the received data and transmits the data to the terminating-side UE 6' via the base station BTS 5c, and the terminating-side UE 6' uses the encryption parameters B to perform decryption.

As described above, even in communication over the same network, encryption/decryption processing of user data must be performed four times, and moreover RNCs perform encryption/decryption processing two out of these four times, so that the burden on the RNCs is increased and the number of channels (number of users) which can be accommodated is decreased. If user data is sent over different networks, RNCs must perform encryption/decryption processing; but if communication is between two UEs over the same network, there should be no need for intermediate equipment to perform encryption/decryption processing.

### SUMMARY OF THE INVENTION

This invention was devised in light of these problems, and has as an object elimination of the need for an RNC to perform encryption/decryption processing when the originating terminal and terminating terminal are both in the same network.

Another object of this invention is the ability for the originating terminal and terminating terminal to each perform encryption/decryption processing of user data one time each, for a total of two times, when both the originating terminal and the terminating terminal are in the same network, so that the burden on RNCs can be alleviated and the number of channels (number of users) accommodated can be increased.

In this invention, the above objects are achieved by an encryption control method in a wireless communication system in which encryption parameters are used to encrypt data in wireless communication, and the encryption parameters are used to perform decryption.

A first encryption control method has a step of judging whether the originating mobile terminal and terminating mobile terminal exist in the same network; a step, if they exist in the same network, of passing data through the network-side equipment without performing encryption/decryption processing; and a step of performing encryption/decryption processing only at the originating mobile terminal and the terminating mobile terminal.

A second encryption control method has a step of making encryption parameters in the originating mobile terminal identical with the encryption parameters in the terminating mobile terminal; a step of having the originating mobile terminal perform data encryption processing using the encryption parameters; and a step of having the terminating mobile terminal perform decryption processing of the received data using the encryption parameters.

A third encryption control method has a step of judging whether the originating mobile terminal and terminating mobile terminal exist in the same network; and a step, if they exist in the same network, of decrypting the encryption performed by the above originating mobile terminal, not in a network-side device, but in the terminating mobile terminal.

In this invention, the above objects are achieved by a wireless communication system in which encryption parameters are used in wireless communication to encrypt data, and the encryption parameters are used to decrypt the data. This wireless communication system comprises control devices in a core network to judge whether an originating mobile terminal and terminating mobile terminal exist in the same network; wireless network control devices to pass data through, without performing encryption/decryption processing, when the originating mobile terminal and terminating mobile terminal exist in the same network; an originating mobile terminal which uses the encryption parameters to perform encryption processing of transmission data and which transmits the encrypted data; and a terminating mobile terminal which uses the encryption parameters to perform decryption of received data. Further, the wireless communication system comprises means for making the encryption parameters in the originating mobile terminal identical with the encryption parameters in the terminating mobile terminal.

In the above wireless communication system, when the originating mobile terminal and the terminating mobile terminal exist in the same network, the above control device of the core network generates an encryption key which is an encryption parameter and transmits the encryption key to the wireless network control devices on the originating side and on the terminating side; the originating-side and terminating-side wireless network control devices receive the encryption key and transmit the key to the originating mobile terminal and to the terminating mobile terminal respectively, so that the encryption parameters of the originating mobile terminal are identical with the encryption parameters of the terminating mobile terminal. When the originating mobile terminal and terminating mobile terminal exist in the same network, the originating-side and terminating-side wireless network control devices pass through data without performing decryption or encryption.

In this invention, the above objects are achieved by means of network control devices in a wireless communication system in which, upon wireless communication, encryption parameters are used to encrypt data, and the encryption parameters are used to decrypt the data. A network control device of this invention comprises means for judging whether an originating mobile terminal and a terminating mobile terminal exist in the same network; means for making the encryption parameters in the originating mobile terminal identical with the encryption parameters in the terminating mobile terminal, when the originating mobile terminal and the terminating mobile terminal exist in the same network; and means for passing data through without performing encryption/decryption processing, when the originating mobile terminal and the terminating mobile terminal exist in the same network.

In this invention, the above objects are achieved by means of mobile terminals in a wireless communication system in which, upon wireless communication, encryption parameters are used to encrypt data, and the encryption parameters are used to decrypt the data. The mobile terminals of this invention comprise means, upon call termination, when the mobile terminal exists in the same network as the originating mobile terminal, for making the encryption parameters identical with the encryption parameters of the originating mobile terminal; means for using the encryption parameters to generate an encryption code and for using the encryption code to decrypt data; and means for performing normal decryption when the originating mobile terminal and the terminating mobile terminal do not exist in the same network.

By means of this invention, when an originating mobile terminal and a terminating mobile terminal exist in the same network, network-side devices pass data through without performing encryption/decryption processing, and encryption/decryption __ processing is performed only by the originating mobile terminal and by the terminating mobile terminal, so that the RNCs need not perform encryption/decryption processing, the burden on the RNCs is alleviated and the number of channels (number of users) accommodated can be increased.

Other features and advantages of the present invention will be apparent from the following description, taken in conjunction with the accompanying drawings.

### BRIEF DESCRIPTION OF THE DRAWINGS

Fig. 1 is a block diagram of a wireless communication system in a case in which an originating mobile terminal and a terminating mobile terminal exist in the same network;
Fig. 2 is a sequence for making an encryption parameter COUNT-C on the originating mobile terminal identical with that on the terminating mobile terminal;
Fig. 3 is a setup sequence for the encryption parameters BEARER and LENGTH;
Fig. 4 is a sequence for making a CK value on the originating side identical with that on the terminating side;
Fig. 5 is another sequence for making a CK value on the originating side identical with that on the terminating side;
Fig. 6 explains the overall sequence;
Fig. 7 explains another overall sequence;
Fig. 8 explains UE, RNC, and MSC encryption control;
Fig. 9 shows the processing flow of the originating-side RNC;
Fig. 10 shows the processing flow of the terminating-side RNC;
Fig. 11 shows the processing flow of the terminating mobile terminal (UE);
Fig. 12 shows in summary the configuration of a wireless communication system;
Fig. 13 explains a specific encryption method;
Fig. 14 explains encryption parameters;
Fig. 15 explains the COUNT-C parameter;
Fig. 16 shows a simple encryption execution sequence for DTCH in a CS (Circuit-switched Service) call between a UE and UTRAN (e.g. RNC); and,
Fig. 17 explains encryption/decryption processing in a case in which an originating terminal (UE) and terminating terminal (UE) both exist within the same network.

### DESCRIPTION OF THE PREFERRED EMBODIMENTS

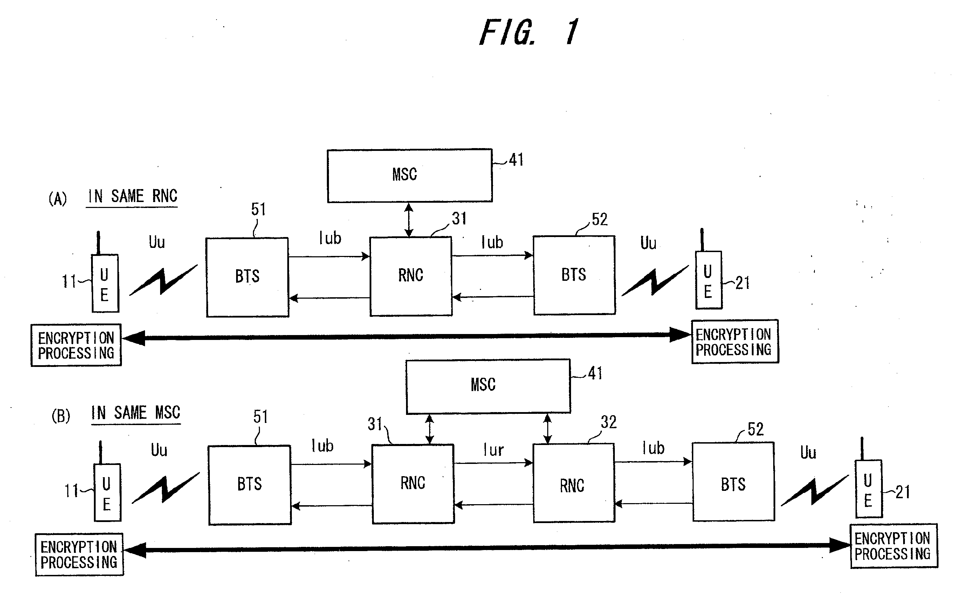

Fig. 1 is a block diagram of a wireless communication system in a case in which an originating mobile terminal and a terminating mobile terminal exist in the same network; (A) is the case in which the originating mobile terminal (UE) 11 and terminating mobile terminal (UE) 21 exist in an area managed by the RNC 31, and (B) is the case in which the originating mobile terminal 11 and terminating mobile terminal 21 exist in an area managed by the MSC 41.

The MSC 41 makes reference the destination telephone number comprised by the setup message input from the originating mobile terminal 11 at the time of call origination and the location table holding telephone numbers of mobile terminals being managed, and investigates whether the terminating mobile terminal 21 exists within the same network as the originating mobile terminal 11. If the originating mobile terminal 11 and terminating mobile terminal 21 exist in a same network and, as shown in (A), they are managed by the same RNC 31, the MSC 41 notifies the RNC 31 of this fact, and the RNC 31 makes the encryption parameters of the originating mobile terminal 11 identical with those of the terminating mobile terminal 21. The originating mobile terminal 11 uses the encryption parameters to perform encryption of the transmission data, which is input to the RNC 31 via the base station BTS 51. The RNC 31 transmits the received information unmodified, without performing decryption, to the terminating mobile terminal 21 via the terminating-side base station BTS 52. The terminating mobile terminal 21 uses the same encryption parameters as the encryption parameters of the originating mobile terminal to perform decryption of the received data. When data is transmitted from the UE 21 to the UE 11 also, encryption control similar to that described above is performed.

On the other hand, when the originating mobile terminal 11 and terminating mobile terminal 21 exist in the same network and are being managed by the same MSC 41 as shown in (B), the MSC 41 notifies the RNCs 31, 32 on the originating and terminating sides of this fact, and cooperates with the RNCs 31, 32 to make the encryption parameters of the originating mobile terminal 11 identical with those of the terminating mobile terminal 21. The originating mobile terminal 11 uses the encryption parameters to perform encryption processing of transmission data, and inputs the encrypted data to the originating-side RNC 31 via the base station BTS 51. The originating-side RNC 31 does not perform encryption processing (decryption), but passes through the received data without modification, transmitting the data to the terminating-side RNC 32. The terminating-side RNC 32 also does not perform encryption processing, but passes through the received data without modification, transmitting the data to the terminating mobile terminal 21 via the terminating-side base station BTS 52. The terminating mobile terminal 21 uses the same encryption parameters as the encryption parameters of the originating mobile terminal to perform decryption processing of the received data. During data transmission from the UE 21 to the UE 11 also, encryption control similar to that described above is performed.

By this means, when the originating mobile terminal 11 and the terminating mobile terminal 21 exist in the same network, the RNCs 31, 32 pass data through without performing encryption processing, and encryption processing need only be performed by the mobile terminals 11, 21, so that the burden on the RNCs 31, 32 is alleviated, and the number of channels (number of users) which can be accommodated can be increased.

The encryption mechanism in a 3GPP system uses encryption parameters such as those shown in Fig. 14. As explained in Fig. 1, if the originating mobile terminal (UE) 11 and terminating mobile terminal (UE) 21 use the same encryption parameters, normal decryption and communication are possible on the data receiving side without encryption/decryption processing by RNCs. Hence in this invention, the encryption parameters of the originating mobile terminal (UE) 11 the encryption parameters of the terminating mobile terminal (UE) 21 are made identical with each other, so that encryption/decryption processing by the RNCs 31, 32 is not necessary.

### (A) Encryption parameter coincidence control

Below, the method for making the encryption parameters of the mobile terminal (UE) 11 identical with those of the mobile terminal(UE) 21 is explained.

### (1) COUNT-C

As explained in Fig. 15, COUNT-C comprises a long-period SN (HFN) and short-period SN (CFN). If encryption/decryption processing is not performed by the RNCs 31, 32, but is performed only by the UEs 11, 21, then the two UEs must both use the same value of COUNT-C. The method used to synchronize COUNT-C is explained below.

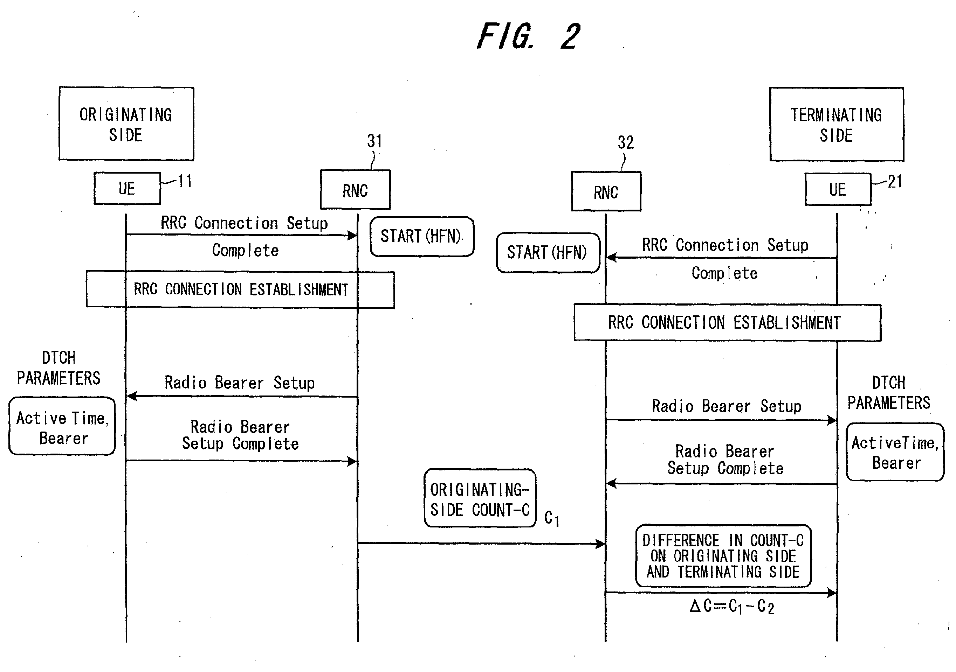

As shown in Fig. 2, the UEs 11, 21 notify the RNCs 31, 32 of the long-period HFNs through RRC Connection Setup Complete. Also, the RNCs 31, 32 notify the UEs 11, 21 (or, the UEs notify the RNCs) of the activation time (CFN), indicating the point of encryption initiation, in the Radio Bearer Setup (Complete) message.

The originating-side RNC 31 notifies the terminating-side RNC 32 of the value of COUNT-C (=C1=HFN+CFN) used on the originating side in the RNSAP (Radio Network Subsystem Application Part) message. The terminating-side RNC 32 computes the difference ΔC between the COUNT-C value (=C2) set on the terminating side and C1 (=C1-C2), and notifies the terminating-side UE 21 of this value in an RRC message. On receiving this message, the UE 21 adds this difference ΔC to the COUNT-C value to be set on the terminating side (=C2), and takes the addition result C2+ΔC (=C1) to be the value of the encryption parameter COUNT-C. As a result, the terminating-side UE 21 uses the same value of COUNT-C as the originating-side UE 11, so that encryption/decryption processing can be executed.

The terminating-side RNC 32 notifies the terminating-side UE 21 of the COUNT-C value (=C1) received from the originating-side RNC 31 without modification, and the terminating-side UE 21 can perform processing with C2=C1.

### (2) BEARER, LENGTH

BEARER takes a value according to the service (voice, packet, or similar); for current setup methods, the same bearer is used on both the originating and terminating sides. Because the same service type setup is performed on both the originating and the terminating sides, the same value for LENGTH is similarly used on the originating and on the terminating sides. As shown in Fig. 3, the DCCH parameters (BEARER, LENGTH, activation time) are set by the RNC 31 in a security mode command message to the UE 11, and the DTCH parameters (BEARER, LENGTH, activation time) are set by the RNC 31 in a Radio Bearer Setup message to the UE 11. In the drawing, the originating-side RNC 31 sets the parameters (BEARER, LENGTH, activation time) in the originating-side UE 11; the terminating-side RNC 32 similarly sets the parameters (BEARER, LENGTH, activation time) in the terminating-side UE 21.

### (3) DIRECTION

DIRECTION indicates either the uplink or downlink direction, and again, the same value must be used on the originating and terminating sides. When performing encryption as shown in Fig. 1, the user data sent as an uplink by the UE 11 on one side is recognized as downlink data by the other UE 21, so that it may be necessary for the terminating-side UE 21 receiving the data to invert the uplink/downlink value for the received data. That is,__ when the terminating terminal 21 performs decryption, the direction should be inverted so that the DIRECTION parameter of the UE 21 is identical with that of the UE 11.

### (4) CK

The encryption key CK (Confidential Key) is generated according to a prescribed algorithm using KSI. KSI is an encryption key held in each mobile terminal UE.

As shown in Fig. 3, after establishment of an RRC connection, the UE 11 sends an initial L3 message to the MSC 41, and the MSC computes CK according to a prescribed algorithm using the parameter KSI comprised by this message; the RNC 31 is notified of this CK by a security mode command message. The UE 11 also computes CK using the same algorithm, so that the UE 11 and RNC 31 have the same value of CK. The drawing shows a case in which CK is set in the originating-side RNC 31, but CK can also be set in the terminating-side RNC 32, so that the UE 21 and RNC 32 have the same value of CK.

The CK value held by both the UE 21 and RNC 32 differs from the CK value held by both the UE 11 and RNC 31. If the originating-side UE 11 and terminating-side UE 21 do not exist in the same network, these CK values are used in independent encryption/decryption processing on the originating side and on the terminating side. However, if the originating-side UE 11 and the terminating-side UE 21 exist in the same network, the CK value on the originating side and the CK value on the terminating side must be made identical each other.

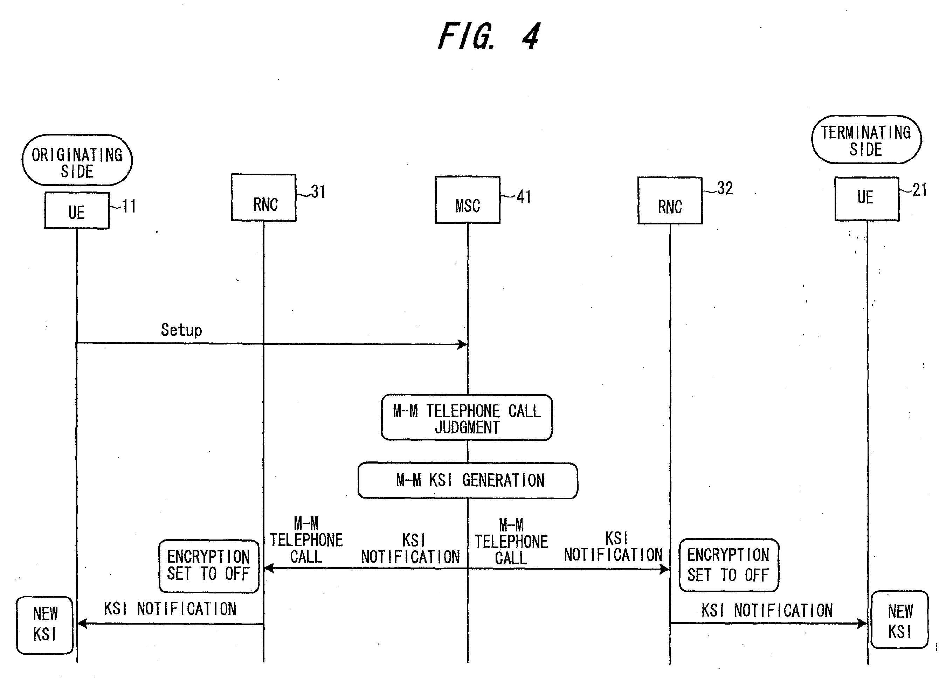

Fig. 4 is a sequence making a CK value on the originating side identical with a CK value on the terminating side.

At the time of call origination, the MSC 41 investigates whether the originating mobile terminal (UE) 11 and the terminating mobile terminal (UE) 21 exist in the same network (M-M telephone call judgment), by referencing the destination telephone number comprised by the SETUP message input from the originating mobile terminal 11. If it is judged that the originating mobile terminal 11 and terminating mobile terminal 21 exist in the same network, if for example both mobile terminals are under management of the same MSC 41 as shown in (B) of Fig. 1, the MSC 41 creates a new KSI value for a M-M telephone call, and notifies the RNCs 31, 32 on the originating and terminating sides that the call is an M-M telephone call and provides the newly created KSI value.

The RNCs 31, 32 on the originating and terminating sides, upon receiving this notification, both set encryption/decryption to off (do not perform encryption/decryption processing), and notify the originating mobile terminal 11 and terminating mobile terminal 21 of the newly received KSI value. The originating mobile terminal 11 and terminating mobile terminal 21 use the received KSI value to generate a CK value according to the same CK generation algorithm. By this means, the CK values of the originating mobile terminal 11 and terminating mobile terminal 21 are made identical with each other.

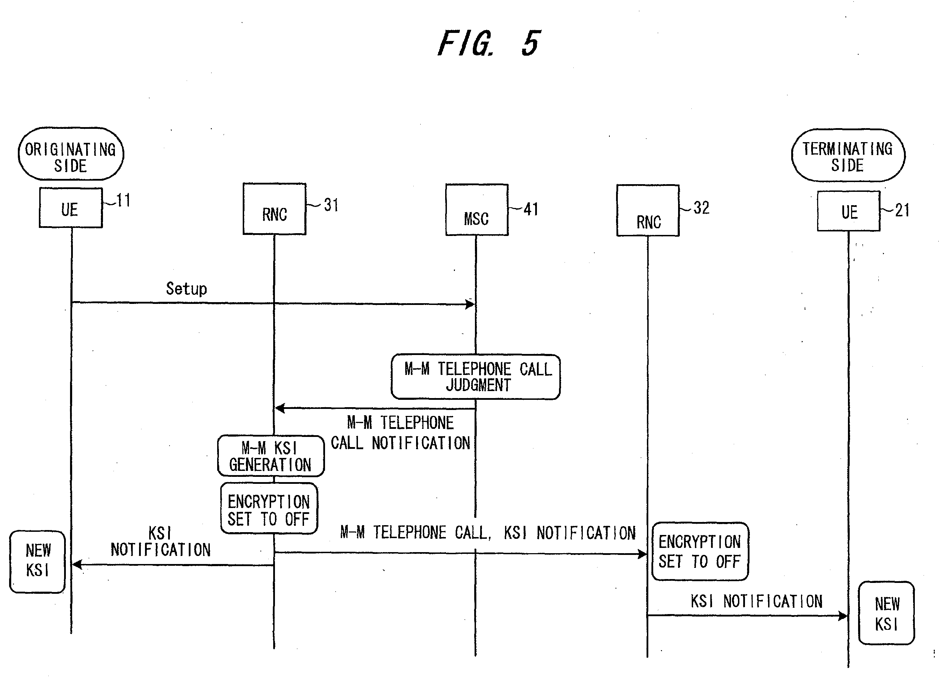

Fig. 5 is another sequence for making a CK value on the originating side identical with a CK value on the terminating side.

The MSC 41 investigates whether the terminating mobile terminal 21 and the originating mobile terminal 11 exist in the same network, by referring to the destination telephone number comprised by the SETUP message input from the originating mobile terminal 11 (M-M telephone call judgment). If the originating mobile terminal 11 and terminating mobile terminal 21 exist in the same network, and if for example both are managed by the same MSC 41 as shown in (B) of Fig. 1, the MSC 41 notifies the originating-side RNC 31 of the fact that the call is an M-M telephone call.

The originating-side RNC 31, on receiving this notification, sets encryption/decryption to off (no encryption/decryption processing is performed), creates the KSI for the M-M telephone call, and notifies the terminating-side RNC 32 of the M-M telephone call and provides the newly created KSI, as well as notifying the originating mobile terminal 11 of the new KSI.

The terminating-side RNC 32, upon receiving this notification, sets encryption/decryption to off (no encryption/decryption processing is performed), and notifies the terminating mobile terminal 21 of the newly created KSI.

The originating mobile terminal 11 and terminating mobile terminal 21 generate a CK value using the new received KSI according to the same CK generation algorithm. By this means, the CK values of the originating mobile terminal 11 and of the terminating mobile terminal 21 are made identical with each other.

### (B) Overall sequence

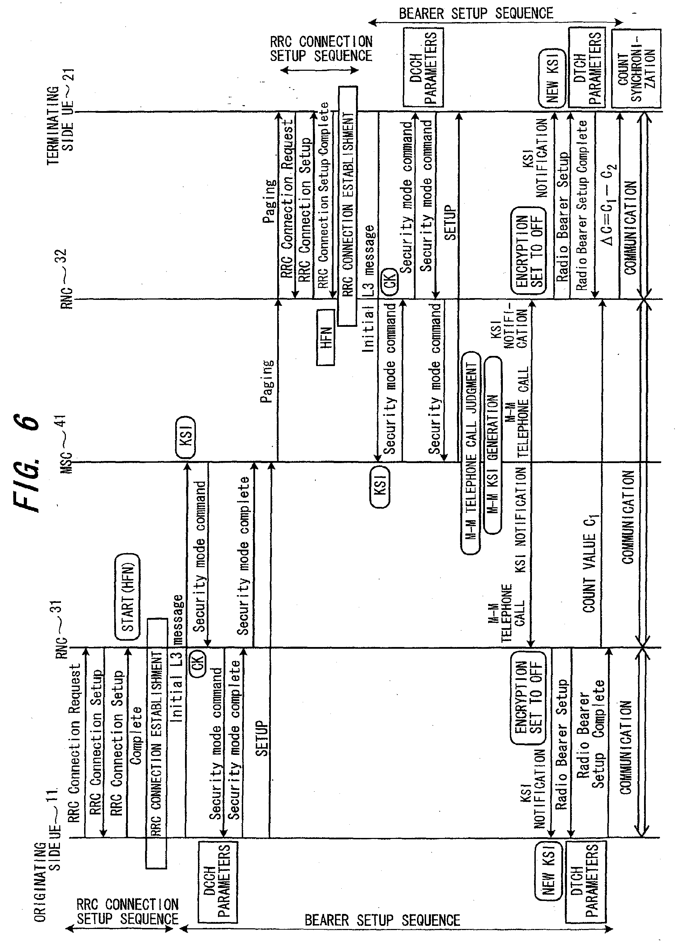

Fig. 6 explains the overall sequence. The CK values are assumed to be generated according to Fig. 4.

When a call is originated by the originating mobile terminal (UE) 11, the RRC connection setup sequence between the UE 11 and RNC 31 is executed, a signaling connection (DCCH) is established, and the UE 11 notifies the RNC 31 of the long-period HFN through RRC Connection Setup Complete.

Then, the bearer setup sequence (DTCH sequence) between the UE 11 and RNC 31 is executed. In this sequence, the UE 11 sends an initial L3 message to the MSC 41, the MSC computes the CK value using the KSI parameter comprised by this message according to a prescribed algorithm, and this CK value is sent to the RNC 31 in a security mode command message. The UE 11 also computes the CK value using the same algorithm, so that the UE 11 and RNC 31 hold the same CK value. Then, the RNC 31 sets DCCH parameters (BEARER, LENGTH, activation time) in the UE 11 through a security mode command message.

When DTCH parameter setup is completed, the UE 11 sends a SETUP message to the MSC 41, and the MSC 41 references the destination telephone number comprised by the SETUP message and sends a paging message to the terminating-side RNC 32, upon which the RNC 32 performs paging. As a result of this paging, the terminating mobile terminal (UE) 21 executes an RRC connection setup sequence with the RNC 32, establishes a signaling connection (DCCH), and notifies the RNC 32 of the long-period HFN through RRC Connection Setup Complete.

Next, the bearer setup sequence (DTCH sequence) between the UE 21 and RNC 32 is executed. In this sequence, the UE 21 sends an initial L3 message to the MSC 41, and the MSC 41 uses the KSI parameter comprised by the message to compute the CK value according to a prescribed algorithm, and sends the CK value to the RNC 32 through a security mode command message. The UE 21 also uses the same algorithm to compute the CK value, so that the UE 21 and RNC 32 hold the same CK value. Then, the RNC 32 sets DCCH parameters (BEARER, LENGTH, activation time) in the UE 21 through a security mode command message.

When DTCH parameter setup is completed, the MSC 41 sends a SETUP message to the UE 21. Also, the MSC 41 analyzes the SETUP message received from the UE 11, and investigates whether the terminating mobile terminal (UE) 21 and originating mobile terminal (UE) 11 exist in the same network (M-M telephone call judgment). If the UEs 11, 21 exist in the same network (if for example both are managed by the same MSC 41 as in (B) of Fig. 1), the MSC 41 creates a new KSI for the M-M telephone call, and notifies the RNCs 31, 32 on the originating side and terminating side of the M-M telephone call, providing the newly created KSI.

Upon receiving this notification, the originating-side and terminating-side RNCs 31, 32 both set encryption/decryption to off (no encryption/decryption processing is performed), and notify the UEs 11, 21 of the new KSI value. The UEs 11, 21 each use the new received KSI value to generate a CK value according to the same CK generation algorithm. By this means, the CK values of the UEs 11, 21 become idential.

Then, the originating-side and terminating-side RNCs 31, 32 set the DTCH parameters (BEARER, LENGTH, activation time) in the UEs 11, 21 through Radio Bearer Setup messages. Following this, the originating-side RNC 31 notifies the terminating-side RNC 32 of the COUNT-C value (=C1=HFN+CFN) used on the originating side in an RNSAP (Radio Network Subsystem Application Part) message. The terminating-side RNC 32 computes the difference ΔC (=C1-C2) between the COUNT-C value to be set on the terminating side (=C2) and C1, and notifies the terminating-side UE 21 of this value in an RRC message. Upon receiving this message, the UE 21 adds this difference ΔC to the COUNT-C value to be set on the terminating side (=C2), and takes the addition result, C2+ΔC (=C1), as the COUNT-C encryption parameter.

Through the above sequence, the DTCH encryption parameters in the originating mobile terminal (UE) 11 are made identical with those in the terminating mobile terminal (UE) 21. Thereafter, the UE 11 uses the encryption parameters to generate an encryption code, encrypts transmission data using this encryption code, and transmits the encrypted data. On the other hand, the UE 21 uses these encryption parameters to generate the same encryption code, and uses this encryption code to decrypt received data.

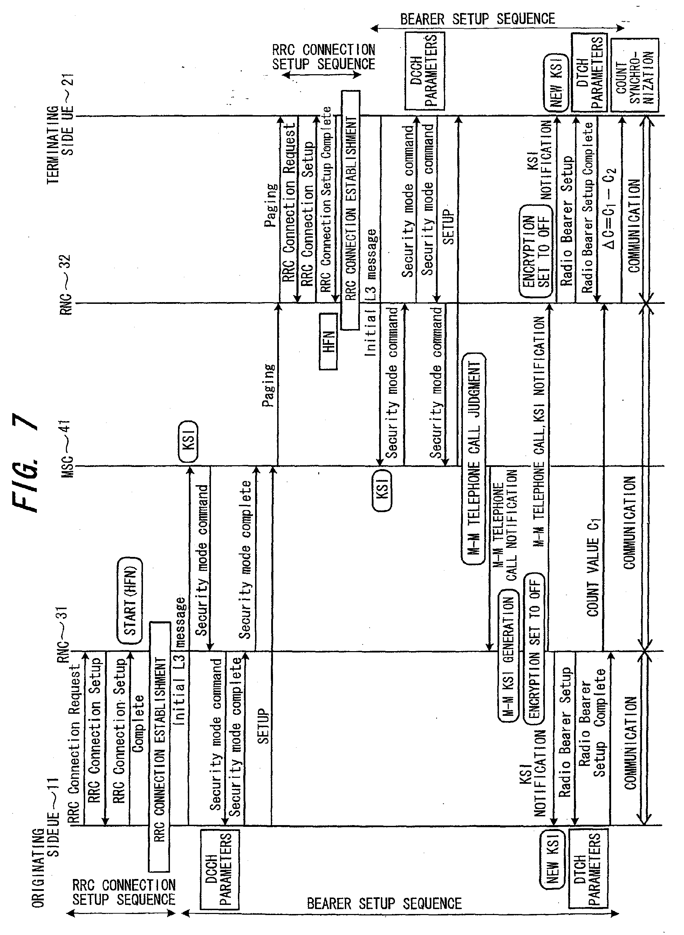

Fig. 7 explains another overall sequence, in a case in which CK values are made identical in accordance with Fig. 5.

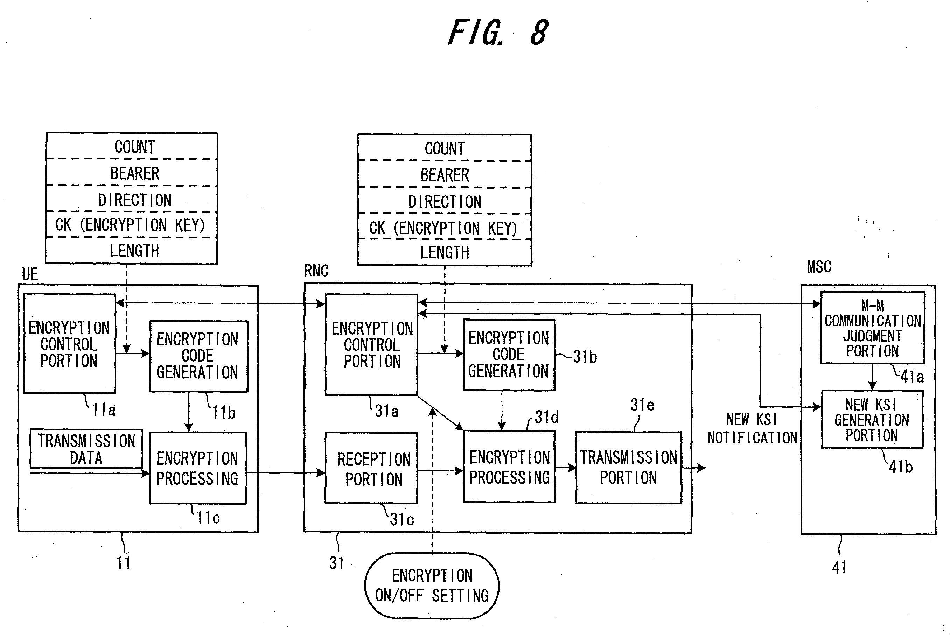

Fig. 8 explains encryption control of the UEs, RNCs and MSCs, and shows control related to the originating side; the configuration on the receiving side is similar.

The M-M telephone call judgment portion 41a of the MSC 41 analyzes the SETUP message and judges that the call is an M-M telephone call, and sends the judgment result to the new KSI generation portion 41b and to the encryption control portion 31a of the RNC 31. In the case of an M-M telephone call, the new KSI generation portion 41b generates a new KSI, and sends this to the encryption control portion 31a of the RNC 31.

The encryption control portions 11a and 31a of the UE 11 and RNC 31 respectively acquire or generate encryption parameters according to the sequence of Fig. 6, and input the encryption parameters to the encryption code generation portions 11b, 31b; in addition, in the case of an M-M telephone call the encryption control portion 31a sets encryption/decryption to off, but if other than an M-M telephone call, sets encryption/decryption to on.

The encryption code generation portion 11b of the originating mobile terminal (UE) 11 uses the encryption parameters to generate an encryption code, and the encryption processing portion 11c uses this encryption code to encrypt transmission data, and transmits the data. The encryption code generation portion 31b of the RNC 31 uses the encryption parameters to generate an encryption code, which is input to the encryption/decryption processing portion 31d, and the receiving portion 31c receives data from the UE 11 and inputs the data to the encryption/decryption processing portion 31d. If the call is not an M-M telephone call (encryption/decryption set to on), the encryption/decryption processing portion 31d uses the encryption code to decrypt the encrypted received data, and transmits the data to the transmission portion 31e. If however the call is an M-M telephone call (encryption/decryption set to off), the encryption/decryption processing portion 31d transmits the received data without modification to the transmission portion 31e, without performing decryption.

Although not shown, if the call is not an M-M telephone call (encryption/decryption set to on), the receiving-side RNC uses the encryption code to perform decryption of the received data and transmits the data to the terminating mobile terminal (UE), whereas if the call is an M-M telephone call (encryption/decryption set to off), the received data is transmitted without modification to the terminating mobile terminal (UE), without performing decryption. The terminating mobile terminal (UE) uses the encryption parameters to generate an encryption code, and uses this encryption code to decrypt the received data, which is output.

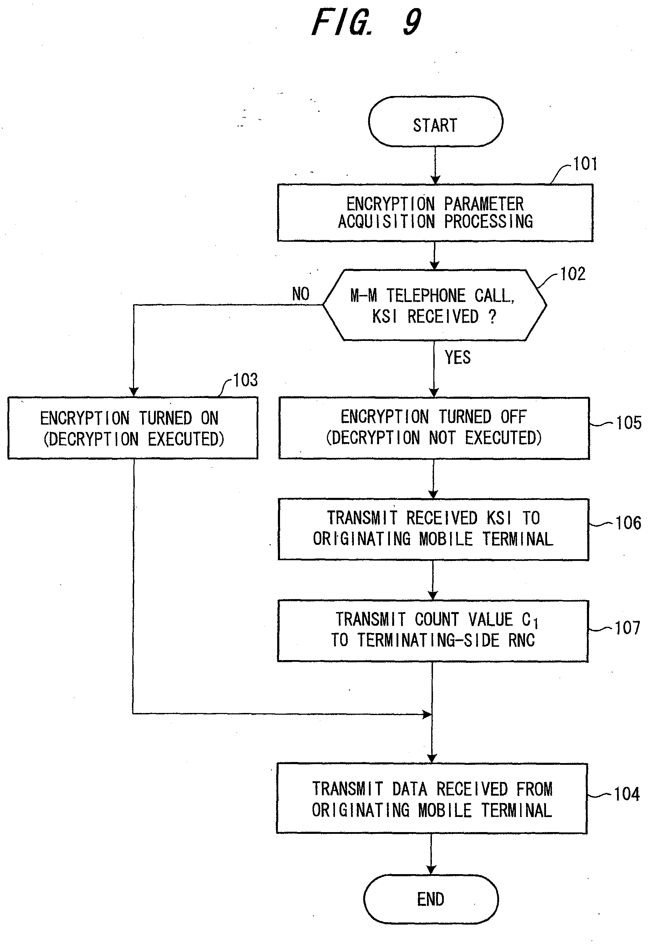

Fig. 9 shows the processing flow of the originating-side RNC 31.

All encryption parameters are acquired or generated according to the sequence of Fig. 6 (step 101). A judgment is then made as to whether the call is an M-M telephone call and a new KSI has been received from the MSC 41 (step 102); if not an M-M call, encryption/decryption is set to on (step 103), and then the encryption parameters are used to generate an encryption code, and this encryption code is used to decrypt received data, and the data received from the originating mobile terminal 11 is transmitted (step 104). On the other hand, if in step 102 the call is judged to be an M-M telephone call, encryption/decryption is set to off (step 105). The KSI received from the MSC 41 is transmitted to the originating mobile terminal (UE) 11 (step 106), and thereafter the count C1 encryption parameter is transmitted to the terminating-side RNC 32 (step 107). Thereafter, data received from the originating mobile terminal 11 is transmitted without modification, and without performing decryption (step 104).

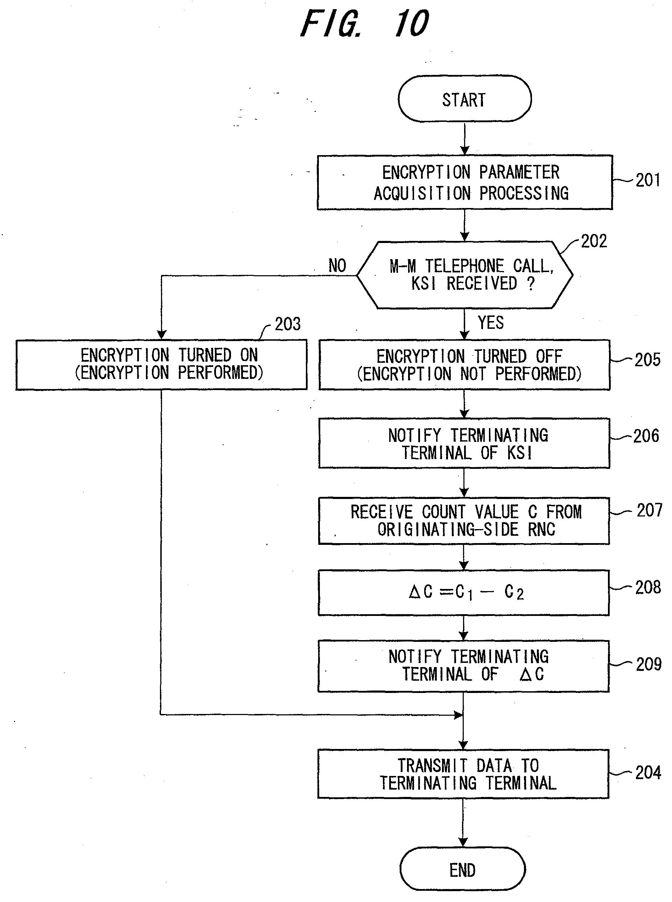

Fig. 10 shows the processing flow of the terminating-side RNC 32.

Encryption parameters are acquired or generated according to the sequence of Fig. 6 (step 201). Then, a judgment is made as to whether the call is an M-M telephone call and a new KSI has been received from the MSC 41 (step 202); if not an M-M telephone call, encryption/decryption is set to on (step 203), and then the encryption parameters are used to generate an encryption code, the encryption code is used to encrypt the received data, and the data is transmitted to the terminating mobile terminal (UE) 21 (step 204).

On the other hand, if in step 202 it is judged that the call is an M-M telephone call, encryption/decryption is set to off (step 205). The KSI received from the MSC 41 is transmitted to the terminating mobile terminal (UE) 21 (step 206), and the count C1 encryption parameter is received from the originating-side RNC 31 (step 207). Then, the terminating-side RNC 32 computes the difference ΔC (=C1-C2) between the value of COUNT-C which is to be set on the terminating side (=C2) and the received value C1 (step 208), and sends this difference in an RRC message to the terminating-side UE 21 (step 209). The UE 21 adds this difference ΔC to COUNT-C (=C2), and takes the addition result C2+ΔC (=C1) to be the encryption parameter COUNT-C.

Subsequently, the terminating-side RNC 32 transmits data received from the originating-side RNC 31 without modification, and without performing encryption (step 204).

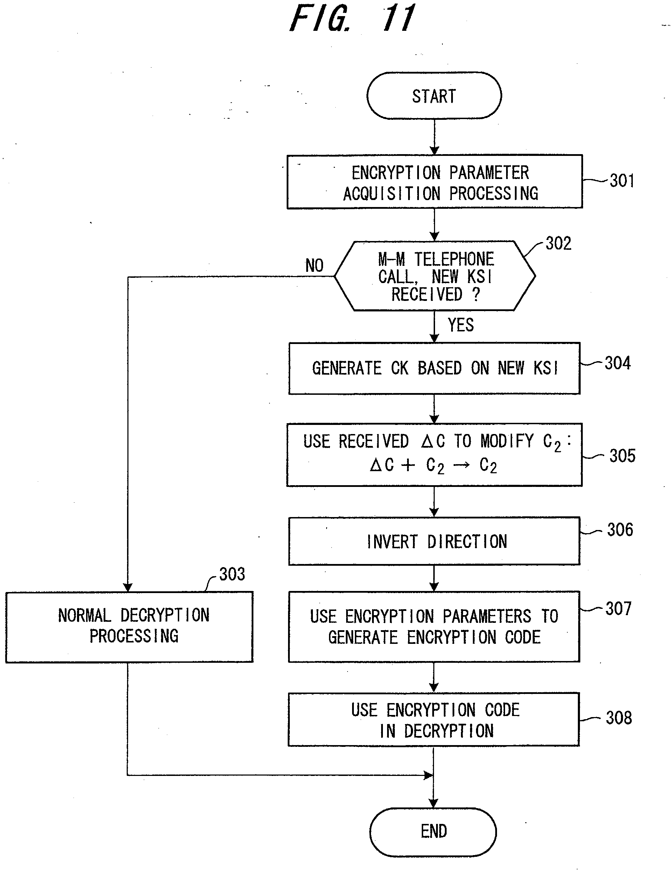

Fig. 11 shows the processing flow of the terminating mobile terminal (UE) 21.

Encryption parameters are acquired or generated according to the sequence of Fig. 6 (step 301).

Then a judgment is made as to whether the call is an M-M telephone call and whether a new KSI has been received from the RNC 32 (step 302); if not an M-M telephone call, normal decryption processing is executed (step 303).

If on the other hand the call is an M-M telephone call, a CK value is generated based on the new KSI received (step 304). Also, the received difference ΔC is added to COUNT-C (=C2), and the addition result C2+ΔC (=C1) is taken to be the COUNT-C encryption parameter (step 305). Further, the DIRECTION encryption parameter is inverted ("downlink" is inverted to "uplink") (step 306). Through the above processing, the,eencryptionparameters are the same in the originating mobile terminal 11 and in the terminating mobile terminal 21.

Then, the terminating mobile terminal 21 uses these encryption parameters to generate an encryption code (step 307), and this encryption code is used to decrypt received data, which is output (step 308).

By means of the above invention, if an originating mobile terminal and a terminating mobile terminal exist in the same network, data is passed through without performing encryption/decryption processing in network-side devices (RNCs or similar), and with encryption/decryption processing performed only in the originating-side and terminating-side mobile terminals. Hence there is no longer a need for RNCs to perform encryption/decryption processing, so that the burden on RNCs is alleviated, and the number of channels (number of users) which can be accommodated can be increased.

As many apparently widely different embodiments of the present invention can be made without departing from the spirit and scope thereof, it is to be understood that the invention is not limited to the specific embodiments thereof except as defined in the appended claims.

## Claims

1. An encryption control method of a wireless communication system, in which, at the time of wireless communication, an encryption parameter is used to encrypt data, and the encryption parameter is used for decryption, comprising steps of:
judging whether an originating mobile terminal and a terminating mobile terminal exist in the same network; and
passing data through without encryption/decryption processing by network-side devices, if said originating mobile terminal and said terminating mobile terminal exist in the same network; and
performing encryption/decryption processing of data only by said originating mobile terminal and said terminating mobile terminal.

2. The encryption control method of a wireless communication system according to Claim 1, further comprising steps of:
making an encryption parameter in said originating mobile terminal identical with an encryption parameter in said terminating mobile terminal;
in said originating mobile terminal using the encryption parameter performing encryption processing of transmission data; and
performing said terminating mobile terminal using the encryption parameter performing decryption processing of received data in.

3. The encryption control method of a wireless communication system according to Claim 2, wherein a count value which is an encryption parameter is transmitted from the originating side to the terminating side, whereby the count values on the originating side is identical with the count value on the terminating side.

4. The encryption control method of a wireless communication system according to Claim 3, wherein a network-side device on the terminating side receives said count value from the originating side and computes the difference between the count values on the originating side and on the terminating side, said terminating mobile terminal is notified of the difference, and said terminating mobile terminal uses the difference to make its own count value identical with the count value of the originating mobile terminal.

5. The encryption control method of a wireless communication system according to Claim 2, wherein a mobile terminal for performing decryption inverts the direction parameter indicating uplink or downlink direction, which is an encryption parameter, to make the encryption parameter in said originating mobile terminal identical with the encryption parameter in said terminating mobile terminal.

6. The encryption control method of a wireless communication system according to Claim 2, wherein, when said originating mobile terminal and said terminating mobile terminal exist in the same network, a network-side device generates an encryption key which is an encryption parameter and transmits said encryption key to the originating mobile terminal and to the terminating mobile terminal, to make the encryption parameter in said originating mobile terminal identical with the encryption parameter in said terminating mobile terminal.

7. The encryption control method of a wireless communication system according to Claim 1, wherein it is judged whether the originating mobile terminal and the terminating mobile terminal exist in the same network from a destination number input by said originating mobile terminal.

8. A wireless communication system, in which, at the time of wireless communication, an encryption parameter is used to encrypt data, and the encryption parameter is used for decryption, comprising:
a control device within a core network, which judges whether an originating mobile terminal and a terminating mobile terminal exist within the same network;
a wireless network control device which, when said originating mobile terminal and said terminating mobile terminal exist within the same network, passes data through without performing encryption/decryption processing;
an originating mobile terminal, which uses an encryption parameter to perform encryption processing of transmission data and which transmits the encrypted data; and,
a terminating mobile terminal, which uses the encryption parameter to perform decryption processing of received data.

9. The wireless communication system according to Claim 8, further comprising means for making the encryption parameter in the originating mobile terminal identical with the encryption parameter in the terminating mobile terminal.

10. The wireless communication system according to Claim 9, wherein said wireless network control device on the originating side makes a count value on the originating side identical with a count value on the terminating side by sending the count value, which is an encryption parameter, to the terminating side.

11. The wireless communication system according to Claim 9, wherein the mobile terminal which performs decryption inverts the direction parameter indicating an uplink or downlink direction, which is an encryption parameter, to make the encryption parameter in said originating mobile terminal identical with the encryption parameter in said terminating mobile terminal.

12. The wireless communication system according to Claim 9, wherein, when said originating mobile terminal and said terminating mobile terminal exist within the same network, said control device of the core network generates an encryption key which is an encryption parameter and transmits the encryption key to wireless network control devices on the originating side and on the terminating side, and the wireless network control devices on the originating side and on the terminating side transmit the received encryption key to the originating mobile terminal and to the terminating mobile terminal respectively, to make the encryption parameter in the originating mobile terminal identical with the encryption parameter in the terminating mobile terminal.

13. The wireless communication system according to Claim 9, wherein, when said originating mobile terminal and said terminating mobile terminal exist within the same network, said control device of the core network notifies an originating-side wireless network control device of this fact, the originating-side wireless network control device creates an encryption key which is an encryption parameter and transmits the encryption key to a terminating-side wireless network control device, and the originating-side and terminating-side wireless network control devices transmit said encryption key to the originating mobile terminal and to the terminating mobile terminal, to make the encryption parameter in the originating mobile terminal identical with the encryption parameter in the terminating mobile terminal.

14. The wireless communication system according to Claim 12 or Claim 13, wherein, when said originating mobile terminal and said terminating mobile terminal exist within the same network, the originating-side and terminating-side wireless network control devices pass data through without performing encryption/decryption processing.

15. The wireless communication system according to Claim 14, wherein, when a mobile terminal performing decryption is not provided with said encryption key, a normal decryption operation is performed, and when the encryption key is provided, encryption parameters including the encryption key are used to perform encryption/decryption operation.

16. An encryption control method of a wireless communication system, in which, at the time of wireless communication, an encryption parameter is used to encrypt data, and the encryption parameter is used for decryption, comprising steps of:
judging whether an originating mobile terminal and a terminating mobile terminal exist in the same network; and,
decryptin data encrypted by said originating mobile terminal by the terminating mobile terminal without decrypting by a network-side device, when said originating mobile terminal and said terminating mobile terminal exist in the same network.

17. A network control device in a wireless communication system in which, at the time of wireless communication, encryption parameters is used to encrypt data, and the encryption parameter is used for decryption, comprising:
means for judging whether an originating mobile terminal and a terminating mobile terminal exist in the same network;
means for making an encryption parameter in the originating mobile terminal identical with an encryption parameter in the terminating mobile terminal, when said originating mobile terminal and said terminating mobile terminal exist in the same network; and,
means for passing data through without performing encryption/decryption processing, when said originating mobile terminal and said terminating mobile terminal exist in the same network.

18. A mobile terminal in a wireless communication system in which, at the time of wireless communication, encryption parameter is used to encrypt data, and the encryption parameter is used for decryption, comprising:
first means for making, upon call termination, an encryption parameter identical with an encryption parameter of an originating mobile terminal, when said mobile terminal and the originating mobile terminal exist in the same network;
second means for using the encryption parameter to generate an encryption code, and for using the encryption code to perform decryption; and,
third means for performing normal decryption, when said mobile terminal and the originating mobile terminal do not exist in the same network.

19. The mobile terminal according to Claim 18, wherein said second means inverts the direction parameter, which is an encryption parameter, to make the encryption parameter identical with the encryption parameters of the originating mobile terminal.
